# FASCICULE DE BREVET EUROPEEN

(11) **EP 0 500 457 B1**
(45) Date de publication et mention de la délivrance du brevet: **30.08.1995**
(21) Numéro de dépôt: 92400432.8
(22) Date de dépôt: 18.02.1992
(51) Int. Cl.: H02K 1/06, H02K 15/02

(54) **Anneaux tôlés**
Blechringe
Sheet rings

(30) Priorité: 19.02.1991 FR 9101967
(43) Date de publication de la demande: 26.08.1992
(73) Titulaire: JEUMONT INDUSTRIE - JI, F-92400 Courbevoie (FR)
(72) Inventeur: Grando, Pascal, F-59740 Solre-le-Chateau (FR); Jeanbart, Jérôme, F-59460 Jeumont (FR); Legoix, Guy, F-59600 Maubeuge (FR)
(74) Mandataire: Le Brusque, Maurice

(56) Documents cités:
- EP-A- 0 414 129
- DD-A- 136 683
- DD-A- 233 018
- DE-A- 3 906 368
- DE-C- 531 735
- DE-U- 7 229 524
- FR-A- 2 292 363
- PATENT ABSTRACTS OF JAPAN vol. 7, no. 136 (E-181)(1281) 14 Juin 1983

## Description

L'invention concerne des anneaux tôlés ou feuilletés, destinés à des machines électriques tournantes. Ces anneaux sont constitués par des empilements d'unités annulaires ou lits. L'invention concerne plus particulièrement les lits destinés à former de tels anneaux. Ils sont utilisés pour réaliser des roues polaires feuilletées ou encore la partie magnétique d'un rotor. Ces anneaux sont donc destinés à être reliés à un arbre.

Pour des raisons pratiques, ces lits ou unités annulaires ne peuvent pas être réalisé(e)s en une seule pièce mais sont constitué(e)s d'éléments dont la forme générale est définie par deux arcs de cercle et deux segments de droite. On constate en effet que la taille des anneaux est relativement grande et il n'existe pas de tôle de dimensions suffisamment importantes pour qu'un anneau entier puisse y être découpé. De plus, même si cela était possible, une telle découpe entraînerait une perte importante de matière. La réalisation de tels éléments permet donc de tenir compte des dimensions des tôles disponibles et d'utiliser la matière de façon optimale.

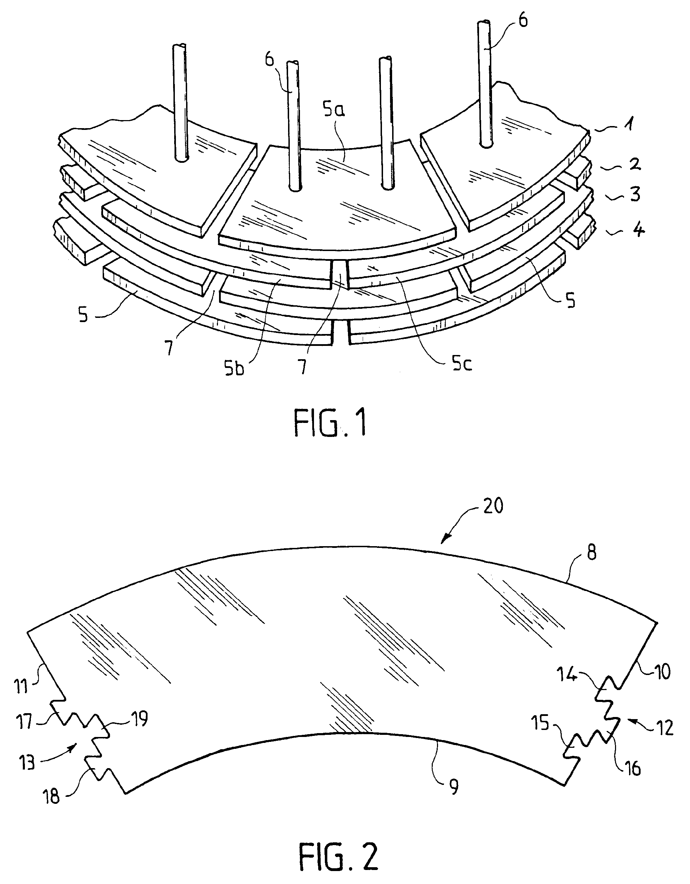

On se réfère maintenant à la Figure 1 qui est une vue en perspective d'un mode de réalisation d'un noyau feuilleté de l'état de la technique. On constate que cet anneau est constitué par un empilement de lits ou unités annulaires 1, 2, 3, 4 constitués ici de quatre éléments 5. Tous ces éléments sont identiques. On constate que les liaisons mécaniques entre les éléments 5 sont réalisées par l'intermédiaire de tiges 6 qui les traversent. Dans cet exemple, l'anneau comprend huit tiges. Un anneau de ce type est décrit dans le brevet allemand DD-A- 136 683.

Cet anneau est destiné à être placé dans un champ magnétique, il est donc souhaitable de créer le moins possible des zones de perturbation du flux magnétique, celles-ci dégradant les caractéristiques de la machine sur laquelle l'anneau est monté. C'est pourquoi, comme l'illustre la Figure 1, les éléments sont empilés de façon à se recouvrir. Les éléments sont disposés de façon non jointive, selon des lits annulaires 1 à 4, de telle sorte que chaque élément d'un lit donné, par exemple l'élément 5a, recouvre l'intervalle 7 laissé libre entre deux éléments, par exemple 5b et 5c, du ou des lits adjacents. Sur la Figure 1, les éléments se recouvrent par moitié. Il est alors indispensable que l'anneau comporte au moins deux lits pour assurer sa cohésion. On connaît des systèmes dans lesquels les éléments se recouvrent par tiers, l'anneau étant alors constitué par au moins un ensemble de trois lits.

On constate ainsi que ces tiges sont communes à tout l'empilement. Elles permettent d'assurer ainsi la cohésion de l'anneau. Elles sont utilisées pour presser l'empilement, de façon à ce que les éléments constitutifs ne puissent pas vibrer.

Ces anneaux tôlés ou feuilletés présentent de nombreux inconvénients. On constate tout d'abord que la présence de tiges, nécessaires à la cohésion de l'anneau, rend difficile, long et coûteux, l'empilage des éléments constitutifs.

De plus, il est nécessaire de prévoir de nombreux trous pour permettre le passage des tiges dans les éléments. Ces trous constituent des zones de perturbation du flux magnétique qui dégradent les caractéristiques de la machine sur laquelle l'anneau est monté.

Enfin, l'anneau est en général monté sur un arbre par frettage. Ainsi, on chauffe l'anneau, on l'ajuste sur l'arbre puis on le laisse refroidir. On constate que ceci crée un effort sur les tiges ainsi que des déformations plastiques locales (mâtage). Ces déformations plastiques au niveau des liaisons tige-élément, entraînent une perte de serrage entre les différents éléments que l'on ne sait pas maîtriser.

L'invention a pour objet de pallier ces différents inconvénients en proposant un anneau feuilleté tournant ainsi qu'un lit constitutif de cet anneau, très résistant mécaniquement, engendrant des perturbations minimes du flux magnétique et peu coûteux.

Ainsi, l'invention concerne un anneau feuilleté tournant constitué par un empilement de lits, chaque lit étant constitué d'au moins deux éléments définis de façon générale par deux arcs de cercle et deux segments de droite et liés entre eux par des moyens d'assemblage constitués par des découpes, les segments de chaque élément présentant une première et une deuxième découpes de forme inverse l'une de l'autre, et tous les éléments présentant les mêmes découpes, de sorte qu'ils peuvent être assemblés en insérant, les unes dans les autres, les découpes de forme inverse, la première découpe étant constituée par deux queues d'aronde mâles proéminentes par rapport audit segment et entourant une queue d'aronde femelle tandis que la deuxième découpe est constituée de deux queues d'aronde femelles entourant une queue d'aronde mâle proéminente par rapport audit segment, et les lits étant empilés de façon à ce que les éléments d'un lit donné recouvrent les moyens d'assemblage du ou des lits adjacents.

De façon à pouvoir presser l'empilement, l'anneau feuilleté tournant selon l'invention comprend de plus des tiges traversant l'empilement.

L'invention sera mieux comprise et d'autres buts, avantages et caractéristiques de celle-ci apparaîtront plus clairement à la lecture de la description qui suit, faite en regard des dessins annexés sur lesquels:
- la Figure 2 représente un premier mode de réalisation de l'invention.

La Figure 2 illustre plus particulièrement un élément 20 constitutif d'un lit. Dans cet exemple, un lit comprend six éléments de ce type. Chacun d'eux est définit par deux arcs de cercle 8 et 9 et par deux segments de droite 10 et 11.

On constate que chaque segment de droite 10, 11 comporte une découpe particulière 12, respectivement 13. La découpe 12 est constituée par deux queues d'aronde femelles 14 et 15 entourant une queue d'aronde mâle 16 proéminente par rapport au segment 10. La découpe 13 présente une forme inverse de celle de la découpe 12 et comporte donc deux queues d'aronde mâles 17, 18, proéminentes par rapport au segment 11, entourant une queue d'aronde femelle 19.

Dans cet exemple, tous les éléments constitutifs du lit sont identiques. On comprend aisément qu'un autre élément peut être emboîté dans la découpe 12, par l'intermédiaire d'une découpe semblable à la découpe 13 de l'élément qui vient d'être décrit. De même, un autre élément peut être emboîté dans la découpe 13, par l'intermédiaire d'une découpe de forme identique à celle de la découpe 12.

On réalise ainsi, en emboîtant les uns dans les autres les différents éléments, un lit annulaire.

Une fois emboîtés les uns dans les autres, les éléments présentent entre eux un certain jeu. Ce montage a l'avantage d'être très résistant.

Un anneau feuilleté ou tôlé est alors obtenu en empilant une pluralité de lits selon l'invention.

En variante, les éléments peuvent comporter des découpes permettant de réaliser une clé en T entre deux éléments adjacents.

On comprend que toute forme géométrique assurant l'imbrication mécanique de deux éléments adjacents peut être utilisée en une autre variante.

Les lits qui viennent d'être décrits peuvent être empilés très facilement et la réalisation d'un anneau tôlé formé avec ceux-ci est peu coûteux. En effet, les lits selon l'invention ne nécessitent pas la présence de tiges et l'empilement peut donc être réalisé très aisément.

De plus, l'absence de tige permet d'éviter le percement des éléments et donc d'éviter toutes les perturbations du flux magnétique occasionnées par les trous ménagés pour le passage des tiges dans les systèmes connus précédemment.

Le jeu qui existe entre les éléments constitutifs d'un lit apporte certes, de petites perturbations du flux magnétique. Mais elles sont mineures par rapport à celles constatées dans les anneaux tôlés connus.

Un certain nombre de tiges peut cependant être prévu. Elles n'ont pas pour objet de maintenir la cohésion de l'anneau et permettent seulement de presser l'empilement pour éviter les phénomènes de vibration. Ces tiges sont cependant en nombre très limité. Ainsi, les inconvénients liés aux déformations plastiques au niveau des liaisons tiges-éléments lors de la mise sous tension de l'anneau, par exemple par calage à chaud sur un arbre, sont diminués en conséquence. La perte de serrage occasionnée par ces déformations est elle aussi diminuée.

On peut noter que l'empilement peut être pressé par d'autres moyens que des tiges.

Lors du frettage, un effort est donc exercé sur les tiges éventuelles, mais il est également exercé sur les découpes des éléments qui sont imbriquées les unes dans les autres. Cependant, on constate que ces efforts occasionnent des desserrages beaucoup moins importants que lorsqu'ils sont exercés sur des tiges, la surface en cause étant beaucoup plus importante.

Les signes de référence insérés après les caractéristiques techniques énoncées dans les revendications, ont pour seul but de faciliter la compréhension de ces dernières, et ne peuvent avoir en aucun cas pour effet de limiter l'invention aux modes particuliers de réalisation qui viennent d'être décrits.

## Revendications

1. Anneau feuilleté tournant constitué par un empilement de lits, chaque lit étant constitué d'au moins deux éléments (20) définis de façon générale par deux arcs de cercle et deux segments de droite et liés entre eux par des moyens d'assemblage constitués par des découpes (12, 13), les segments (10, 11) de chaque élément présentant une première et une deuxième découpes (12, 13) de forme inverse l'une de l'autre, et tous les éléments (20) présentant les mêmes découpes, de sorte qu'ils peuvent être assemblés en insérant, les unes dans les autres, les découpes (12, 13) de forme inverse, la première découpe (13) étant constituée par deux queues d'aronde mâles (17, 18) proéminentes par rapport audit segment (11) et entourant une queue d'aronde femelle (19) tandis que la deuxième découpe (12) est constituée par deux queues d'aronde femelles (14, 15) entourant une queue d'aronde mâle (16) proéminente par rapport audit segment (10), et les lits étant empilés de façon à ce que les éléments d'un lit donné recouvrent les moyens d'assemblage du ou des lits adjacents.

2. Anneau selon la revendication 1 caractérisé en ce que tous les éléments (20) sont identiques.

3. Anneau feuilleté tournant selon l'une des revendications 1 ou 2 caractérisé en ce qu'il comprend des tiges traversant l'empilement pour permettre de presser ce dernier.

## Patentansprüche

1. Geschichteter Drehring, der aus einem Stapel von Betten besteht, wobei jedes Bett aus mindestens zwei Elementen (20) besteht, die allgemein durch zwei Kreisbögen und zwei gerade Abschnitte bestimmt und miteinander durch Mittel für den Zusammenbau verbunden sind, die aus Aussparungen (12, 13) gebildet sind, wobei die Abschnitte (10, 11) jedes Elementes eine erste und eine zweite Aussparung (12,13) von zueinander umgekehrter Form aufweisen, und wobei die Elemente (20) die gleichen Aussparungen aufweisen, derart, daß sie zusammengebaut werden können, indem die Aussparungen (12, 13) von umgekehrter Form ineinander eingefügt werden, wobei die erste Aussparung (13) aus zwei vorstehenden Schwelbenschwänzen (17, 18) besteht, die bezüglich des Segmentes (11) vorspringen und einen aufnehmenden Schwalbenschwanz (19) umgeben, während die zweite Aussparung (12) aus zwei aufnehmenden Schwalbenschwänzen (14, 15) besteht, die einen vorstehenden Schwalbenschwanz (16) umgeben, der bezüglich des Abschnittes (10) vorspringt, und wobei die Betten derart gestapelt sind, daß die Elemente eines gegebenen Bettes die Mittel für den Zusammenbau des angrenzenden Bettes bzw. der angrenzenden Betten überdecken.

2. Ring nach Anspruch 1, **dadurch gekennzeichnet**, daß alle Elemente (20) identisch sind.

3. Geschichteter Drehring nach einem der Ansprüche 1 oder 2, **dadurch gekennzeichnet**, daß er Stangen aufweist, weiche den Stapel durchqueren, um zu erlauben, letzteren zu pressen.

## Claims

1. A rotary laminated ring made of a stack of beds, whereas every bed comprises at least two elements (20), generally defined by two arcs of a circle and two line segments, connected together by assembly means made of cut-outs (12, 13), whereas the segments (10, 11) of each element exhibits a first and a second cut-out (12, 13) whose shapes are reverse with respect to one another, whereby all the elements (20) exhibit the same cut-outs, so that they can be joined together by inserting the cut-outs, of reverse shapes with respect to one another, whereas the first cut-out (13) is made of two male dovetails (17, 18) protruding in relation to the said segment (11) and hugging a female dovetail (19), whereas the second cut-out (12) is made of two female dovetails (14, 15) hugging a male dovetail (16) protruding in relation to the said segment and whereas the beds are stacked on top of one another so that the elements of a given bed cover the assembly means of the adjacent bed(s).

2. A ring according to claim 1 characterised in that all the elements (20) are identical.

3. A rotary laminated ring according to one of claims 1 or 2 characterised in that it contains rods extending through the stack in order to press the said stack.
